# EUROPEAN PATENT SPECIFICATION

(11) **EP 2 505 791 B1**
(45) Date of publication and mention of the grant of the patent: **26.08.2015**
(21) Application number: 12159361.0
(22) Date of filing: 14.03.2012
(51) Int. Cl.: F01D 25/24, F02K 1/80

(54) **Securing system and corresponding gas turbine engine**
Befestigungssystem und zugehöriges Gasturbinentriebwerk
Système de fixation et moteur à turbine à gas associé

(30) Priority: 28.03.2011 GB 201105103
(43) Date of publication of application: 03.10.2012
(73) Proprietor: Rolls-Royce plc, London SW1E 6AT (GB)
(72) Inventor: Garry, Ian Murray, Thurcaston, Leicestershire LE7 7JJ (GB)
(74) Representative: Rolls-Royce plc

(56) References cited:
- GB-A- 2 089 439
- US-A- 3 199 294
- US-A- 5 934 868
- US-A1- 2007 025 837

## Description

### Field of the Invention

The present invention relates to a securing system for securing a component to a gas turbine engine casing

### Background of the Invention

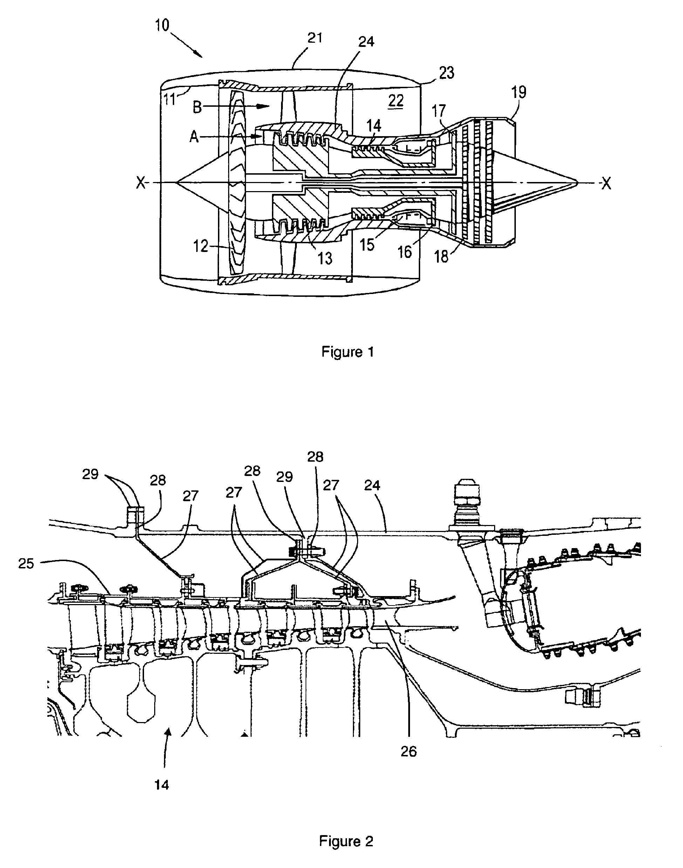

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23. The compressors, combustion equipment and turbines are contained within a core engine casing 24.

The gas turbine engine 10 works in a conventional manner so that air entering the intake 11 is accelerated by the fan 12 to produce two air flows: a first air flow A into the intermediate pressure compressor 14 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Figure 2 shows a detailed view on a similar longitudinal cross-section of part of the high-pressure compressor 14 and core engine casing 24. An inner compressor casing 25 and the outlet guide vanes (OGVs) 26 are secured to the outer core engine casing via arms 27, each having a flange 28 which is bolted to one or more respective flanges 29 of the outer casing.

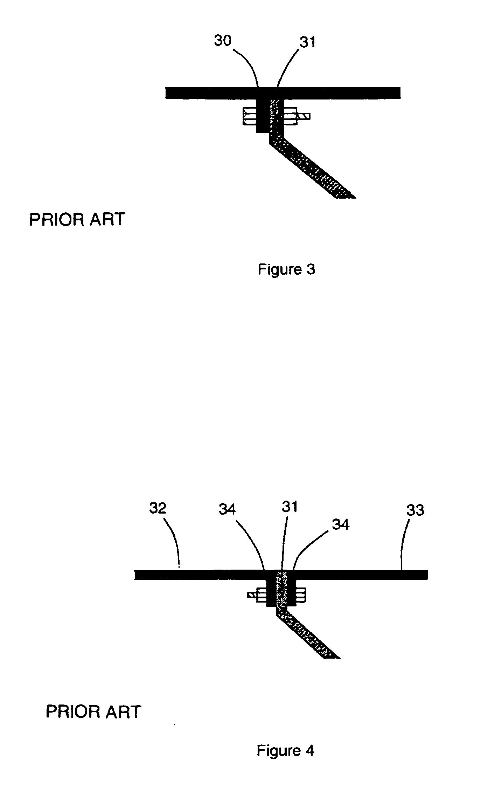

One known securing system, shown schematically in Figure 3, involves an internal flange 30 of the core engine casing which is attached to e.g. the OGV support flange 31 by means of circumferentially spaced pairs of nuts and bolts. The internal flange is machined as an integral part of the core engine casing. However, machining an internal flange in the middle of a casing can be a difficult and time consuming operation. Further, the system requires the whole core engine casing to be made of one material, even though the different parts of the casing may have different materials requirements.

Another known securing system, shown schematically in Figure 4, involves forming the core engine casing from a front casing portion 32 and a rear casing portion 33. These two portions have internal flanges 34 which sandwich the OGV support flange 31 when joined together to complete the casing. However, although the two casing portions can now be formed of different materials and machining internal flanges in the middle of the casing portions is avoided, a problem arises from the highly pressurised nature of the gases inside the casing. More particularly, the interfaces between the internal flanges 34 and the support flange 30 need to be made as airtight as possible, but this is difficult to achieve unless the contacting surfaces of the flanges are completely flat and parallel.

Thus it would be desirable to provide a securing system which overcomes or mitigates the above problems of known systems.

### Summary of the Invention

Accordingly, in a first aspect, the present invention provides a securing system for securing a component to a core engine casing in a gas turbine engine casing, the system having:
a core engine casing formed from a front casing portion and a rear casing portion, the casing portions having respective casing flanges at which the casing portions are detachably joined together, and
a component flange extending from a component, the component flange being configured so that, when the casing portions are joined together, the component flange is trapped between the casing flanges;
wherein one of the casing flanges projects inwards from the casing to form an airtight seal with the component flange on the inside of the casing, and characterised in that the other of the casing flanges projects outwards from the casing to form a airtight seal with the component flange on the outside of the casing.

By forming the core engine casing from a front casing portion and a rear casing portion, the casing can advantageously be formed of different materials at front and rear, allowing materials selections to be made which are better tailored to the local operational conditions of the casing. Further, machining internal flanges in the middle of the casing portions can be avoided. However, in addition, by forming the airtight seals on opposite sides of the casing the airtightness of the join between the casing portions can be significantly improved.

The system may have any one or, to the extent that they are compatible, any combination of the following optional features.

The component flange may extend from a component in the interior of the casing. Alternatively, the component flange may extend from a component external to the casing.

Each airtight seal may be perfected by mechanical fasteners passing through the component flange and the respective casing flange. For example, the mechanical fasteners can be circumferentially spaced bolts tightened with respective nuts.

The system may have centralising formations on the component flange and/or on the casing flanges, the formations centralising the casing portions relative to each other when they are joined together.

The component may be part of the compressor section of the engine.

In a second aspect, the present invention provides a gas turbine engine having the securing system of the first aspect.

### Brief Description of the Drawings

Embodiments of the invention will now be described by way of example with reference to the accompanying drawings in which:
Figure 1 shows a longitudinal cross-section through a ducted fan gas turbine engine which incorporates a securing system in accordance with the present invention;
Figure 2 shows a detailed view on a similar longitudinal cross-section of part of the high-pressure compressor and core engine casing;
Figure 3 shows schematically a known securing system;
Figure 4 shows schematically another known securing system;
Figure 5 shows schematically a securing system according to an embodiment of the present invention; and
Figure 6 shows schematically a securing system according to a variant of the embodiment of Figure 5.

### Detailed Description

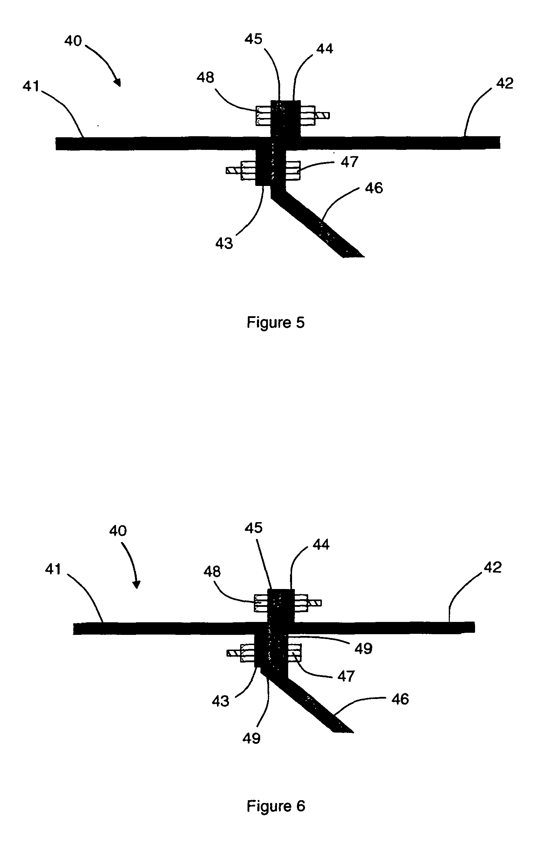

Figure 5 shows schematically a securing system according to a first embodiment of the present invention. A core engine casing 40 is formed from a front casing portion 41 and a rear casing portion 42. At the joint between the two portions, the front casing portion has an inwardly projecting casing flange 43 and the rear casing portion has an outwardly projecting casing flange 44. A component flange 45 trapped between the two casing flanges is provided at the end of an arm 46 extending from a component, such as a compressor casing or NGV, to be secured within the casing.

The component flange 45 extends generally radially outwardly as shown, however, in other configurations the component flange may extend generally radially inwardly where the component is located radially outwardly of the casing 40.

A set of circumferentially spaced bolts 47 pierce the component flange 45 and the inwardly projecting casing flange 43 and are tightened by respective nuts. This joins the flanges, forming an airtight seal between their flat and parallel contacting surfaces. Likewise, an airtight seal between the component flange and the outwardly projecting casing flange 44 is perfected by a further set of circumferentially spaced bolts 48 and respective nuts.

The system reduces manufacturing complexity as separate front 41 and rear 42 casing portions can be produced instead of just one large casing. Smaller casing portions generally also allow better material utilisation through less machining waste. Dividing the casing into two portion facilitates repair, as well as allowing the front and rear portions to be produced from different materials.

Furthermore, by having inwardly projecting 43 and outwardly projecting 44 flanges, only two surfaces are sealed together by any one set of bolts, rather than four surfaces as in the known system of Figure 4. Consequently, the bolts can be reduced in length, which for the same bolt end load causes less elongation, and hence loss of end load and improved sealing. In addition, as only two flanges rather than three are joined by each set of bolts, there is a reduced likelihood of misalignment in each pair of joined flanges.

However, as shown schematically in Figure 6, to further reduce the likelihood of misalignment, the component flange 45 can have centralising formations 49 formed thereon which centralise the casing portions 41, 42 to each other and to the component flange. Alternatively, the centralising formations can be formed on the casing flanges 43, 44. The casing portions 41, 42 are concentric with one another having a common central axis and in a gas turbine engine this axis is coincident to the engine's rotational axis.

While the invention has been described in conjunction with the exemplary embodiments described above, many equivalent modifications and variations will be apparent to those skilled in the art when given this disclosure. For example, rather than an internal component, such as a compressor casing or NGV, the component flange may extend from a component which is external to the casing. Accordingly, the exemplary embodiments of the invention set forth above are considered to be illustrative and not limiting. Various changes to the described embodiments may be made without departing from the scope of the invention as defined by the appended claims. For example the flanges are annular, but may be part annular, circumferentially segmented or of a castellated form.

## Claims

1. A securing system for securing a component to a core engine casing in a gas turbine engine, the system having:
a core engine casing (40) formed from a front casing portion (41) and a rear casing portion (42), the casing portions having respective casing flanges (43, 44) at which the casing portions are detachably joined together, and
a component flange (45) extending from a component, the component flange being configured so that, when the casing portions are joined together, the component flange is trapped between the casing flanges;
wherein one of the casing flanges (43) projects inwards from the casing to form an airtight seal with the component flange on the inside of the casing, and **characterised in that** the other of the casing flanges (44) projects outwards from the casing to form an airtight seal with the component flange on the outside of the casing.

2. A securing system according to claim 1, wherein each airtight seal is perfected by mechanical fasteners (47, 48) passing through the component flange and the respective casing flange.

3. A securing system according to claim 1 or 2, further having centralising formations (49) on the component flange and/or on the casing flanges, the formations centralising the casing portions relative to each other when they are joined together.

4. A securing system according to any one of the previous claims, wherein the component is part of the compressor section of the engine.

5. A gas turbine engine having the securing system of any one of the previous claims.

## Patentansprüche

1. Sicherungssystem zum Sichern einer Komponente eines Kerntriebwerkgehäuses in einem Gasturbinentriebwerk, wobei das System folgendes aufweist:
ein Kerntriebwerksgehäuse (40), das aus einem vorderen Gehäuseteil (41) und einem hinteren Gehäuseteil (42) gebildet wird, wobei die Gehäuseteile entsprechende Gehäuseflansche (43, 44) aufweisen, an denen die Gehäuseteile lösbar miteinander verbunden sind; und
einen Komponentenflansch (45), der sich von einer Komponente erstreckt, wobei der Komponentenflansch so konfiguriert ist, dass, wenn die Gehäuseteile miteinander verbunden sind, der Komponentenflansch zwischen den Gehäuseflanschen eingeschlossen ist;
wobei einer der Gehäuseflansche (43) einwärts von dem Gehäuse vorsteht, um eine luftdichte Abdichtung mit dem Komponentenflansch an der Innenseite des Gehäuses zu bilden; und
**dadurch gekennzeichnet, dass** der andere Gehäuseflansch (44) von dem Gehäuse auswärts vorsteht, um einen luftdichten Abschluss mit dem Komponentenflansch an der Außenseite des Gehäuses zu bilden.

2. Sicherungssystem nach Anspruch 1, wobei jede luftdichte Abdichtung durch mechanische Befestigungsmittel (47, 48) vollendet wird, die durch den Komponentenflansch und den entsprechenden Gehäuseflansch verlaufen.

3. Sicherungssystem nach Anspruch 1 oder 2, ferner mit zentralisierenden Formationen (49) an dem Komponentenflansch und/oder an den Gehäuseflanschen, wobei die Formationen die Gehäuseteile im Verhältnis zueinander zentralisieren, wenn sie miteinander verbunden werden.

4. Sicherungssystem nach einem der vorstehenden Ansprüche, wobei die Komponente Teil des Verdichterabschnitts des Triebwerks ist.

5. Gasturbinentriebwerk mit dem Sicherungssystem nach einem der vorstehenden Ansprüche.

## Revendications

1. Système de fixation pour fixer un composant à un carter de moteur de base dans une turbine à gaz, le système ayant :
un carter de moteur de base (40) formé d'une partie de carter avant (41) et d'une partie de carter arrière (42), les parties de carter ayant des brides de carter (43, 44) respectives au niveau desquelles les parties de carter sont jointes amovibles ensemble, et
une bride de composant (45) s'étendant d'un composant, la bride de composant étant conçue de sorte que, lorsque les parties de carter sont jointes ensemble, la bride de composant soit prise au piège entre les brides de carter ;
l'une des brides de carter (43) faisant saillie vers l'intérieur du carter pour former un joint étanche avec la bride de composant sur l'intérieur du carter, et **caractérisé en ce que** l'autre des brides de carter (44) fait saillie vers l'extérieur du carter pour former un joint étanche avec la bride de composant sur l'extérieur du carter.

2. Système de fixation selon la revendication 1, chaque joint étanche étant complété par des fixations mécaniques (47, 48) passant à travers la bride de composant et la bride de carter respective.

3. Système de fixation selon la revendication 1 ou 2, ayant en outre des formations de centralisation (49) sur la bride de composant et/ou sur les brides de carter, les formations centralisant les parties de carter l'une par rapport à l'autre lorsqu'elles sont jointes ensemble.

4. Système de fixation selon l'une quelconque des revendications précédentes, le composant faisant partie de la section de compresseur du moteur.

5. Moteur à turbine à gaz ayant le système de fixation selon l'une quelconque des revendications précédentes.
